(19) Europäisches Patentamt
European Patent Office
Office européen des brevets

(11) **EP 3 712 197 A1**

(12) **DEMANDE DE BREVET EUROPEEN**

(43) Date de publication:
**23.09.2020 Bulletin 2020/39**

(21) Numéro de dépôt: **19305353.5**

(22) Date de dépôt: **22.03.2019**

(51) Int Cl.:
*C08G 69/26* (2006.01)          *C08G 69/36* (2006.01)
*C08K 7/20* (2006.01)           *C08L 77/02* (2006.01)
*C08L 77/06* (2006.01)          *B29C 45/00* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Arkema France**
**92700 Colombes (FR)**

(72) Inventeurs:
• **CASSIANO GASPAR, Stefânia**
  **27470 SERQUIGNY (FR)**
• **BRULE, Benoît**
  **27470 SERQUIGNY (FR)**
• **SABARD, Mathieu**
  **27470 SERQUIGNY (FR)**

(74) Mandataire: **Arkema Patent**
**Arkema France**
**DRD-DPI**
**420, rue d'Estienne d'Orves**
**92705 Colombes Cedex (FR)**

(54) **UTILISATION DE COPOLYAMIDES POUR LA FABRICATION DE COMPOSITIONS A RIGIDITE STABLE SOUS L'EFFET DE L'HUMIDITE**

(57) L'invention vise principalement l'utilisation d'un copolyamide semicristallin étant de formule $A/X_1Y$, dans laquelle :
- A est un motif répétitif obtenu par polycondensation
- d'au moins un lactame en $C_6$ à $C_{18}$, ou
- d'au moins un aminoacide en $C_6$ à $C_{18}$, ou
- d'au moins un motif répétitif XY obtenu par polycondensation d'au moins une diamine aliphatique linéaire (X) en $C_4$ à $C_{18}$ et d'au moins un acide dicarboxylique aliphatique (Y) en $C_6$ à $C_{18}$; et

- $X_1Y$ est un motif répétitif obtenu à partir de la polycondensation d' d'au moins une diamine cycloaliphatique $(X_1)$, et d'au moins un acide dicarboxylique aliphatique (Y) en $C_6$ à $C_{18}$,

le ratio massique entre le comonomère A et le comonomère $X_1Y$ étant compris de 60/40 à 90/10 pour préparer des objets dont le module en traction, mesuré selon la norme ISO 527 ne varie pas plus de 20% entre l'état sec et l'état saturé en eau.

L'invention vise par ailleurs une composition comprenant 25 à 65 % en poids dudit copolyamide semicristallin, 35 à 75% en poids de renforts, 0 à 10% en poids d'au moins un modifiant choc, 0 à 10 % en poids d'au moins un agent modulateur de viscosité, 0 à 20 % en poids d'au moins une charge et 0 à 5% en poids d'additifs. Elle vise enfin un procédé de fabrication de ladite composition ainsi qu'un objet moulé susceptible d'être obtenu à partir de ladite composition.

EP 3 712 197 A1

**Description**

**[Domaine technique]**

La présente demande de brevet concerne l'utilisation de copolyamides semi-cristallins et, en particulier, semi-alicycliques pour la fabrication de compositions à base de tels copolyamides présentant une rigidité stable sous l'effet de la température et/ou de l'humidité, leur procédé de fabrication ainsi que lesdites compositions.

**[Technique antérieure]**

De nombreuses applications dans le domaine E/E exigent la mise en oeuvre de compositions à partir de polymères présentant une très haute rigidité, par exemple pour les coques de téléphone ou les pièces d'ordinateur. La rigidité est en effet un facteur crucial pour permettre une réduction de poids, puisqu'il permet une réduction de l'épaisseur des pièces. La rigidité d'un matériau se traduit par un module élevé, c'est-à-dire une faible déformation sous la contrainte fixée. Selon la sollicitation mécanique, la rigidité d'un matériau est caractérisée par un module (de traction si sollicitation de traction, de flexion si sollicitation de flexion....). Néanmoins, ces modules varient avec la température et l'humidité de manière comparable.

Il s'avère cependant important dans certaines applications que la rigidité soit peu affectée par des changements de température ou l'hygrométrie. En effet, la stabilité du module est également un facteur important pour assurer un assemblage aisé des pièces lorsque celui-ci est réalisé dans des lieux où la température et/ou l'humidité peut être élevée et aussi pour assurer une constance de la rigidité du matériau sur la plage de température et d'humidité d'utilisation dudit matériau.

Ainsi, on recherche des polymères dont le module reste stable dans la plage de températures et/ou d'humidité auxquels ils sont exposés, notamment pendant l'assemblage des pièces et le fonctionnement ultérieur des dispositifs. De préférence, le module serait stable à une température comprise de 20°C à 40°C, de préférence de 20°C à 70°C et une humidité relative comprise de 0 à 100%.

Par ailleurs, les formulations de polymère doivent cristalliser suffisamment rapidement pour permettre un temps de transformation, notamment un temps de cycle, adaptés à un procédé industriel.

Or les polyamides aliphatiques présentent généralement une perte importante de la rigidité lorsque la température et/ou l'humidité augmente.

On connait de la demande EP 2 113 535 A1 des masses de moulage comprenant des copolyamides transparents présentant une température de transition vitreuse Tg de 80 à 150°C, et obtenus à partir d'un mélange d'au moins deux diamines différentes comprenant au moins 40% en moles de diamine cycloaliphatique et au moins 10% en moles de diamine aliphatique. Ces masses de moulage sont dits avoir une bonne aptitude à être transformées par injection et une faible déformation lorsqu'elles sont soumises au test climatique (55°C et 100% d'humidité relative). Néanmoins, ces formulations sont pour la plupart amorphes et aucune information sur la sensibilité du module en fonction de la température et l'humidité n'est fournie.

On connait par ailleurs du brevet US 8,586,664 B2 un matériau de moulage comprenant au moins un copolyamide semi-cristallin transparent avec une Tg de 80°C au maximum, une température de fusion Tf de 150°C au plus et une enthalpie de fusion de 20 J/g et obtenu à partir d'un mélange d'au moins deux diamines différentes comprenant 10 à 40% en moles de diamine cycloaliphatique et au moins 60% en moles de diamine aliphatique. Le document enseigne que ces formulations sont flexibles et présentent un module de traction n'excédant pas 1700 MPa qui varie peu entre l'état sec et conditionné. Il n'évoque cependant pas son évolution avec la température ni en milieu d'une humidité supérieure à 50%.

Enfin, la demande française non publiée déposée sous le numéro FR 1758829 décrit l'utilisation de compositions comprenant au moins un copolyamide de formule $A/X_1Y$ dans lequel :

- A est un motif répétitif obtenu par polycondensation d'au moins un lactame en $C_6$-$C_{12}$, ou d'au moins un aminoacide en $C_6$ à $C_{12}$, ou d'au moins un motif répétitif XY obtenu par polycondensation d'au moins une diamine aliphatique (X) en $C_4$ à $C_{18}$ et d'au moins un acide dicarboxylique aliphatique (Y) en $C_6$ à $C_{18}$;
- $X_1Y$ est un motif répétitif obtenu à partir de la polycondensation d'une diamine ($X_1$) choisie parmi une arylamine, une diamine cycloaliphatique et une diamine aliphatique ramifiée et d'au moins un acide dicarboxylique aliphatique (Y) identique à celui du motif XY,

le ratio massique entre le comonomère A et le comonomère $X_1Y$ étant compris de 60/40 à 95/5, et comprenant par ailleurs des fibres de verre à section circulaire, pour limiter le gauchissement tout en conservant le temps de cycle.

Il reste toutefois le problème de proposer une formulation à base de polyamides alliant une rigidité stable sur une plage de température et/ou d'humidité étendue, avec une aptitude à la transformation par moulage à l'injection.

**[Résumé de l'invention]**

L'invention a donc pour but de proposer une composition à base de copolyamide alliant une aptitude au moulage par injection et une rigidité stable sur une plage de température étendue, même en milieu humide.

En effet, la présente invention repose sur la constatation qu'il était possible d'obtenir des compositions à base de copolyamide présentant une rigidité stable sur une plage de température étendue, y compris lorsqu'ils ont été exposés à l'humidité.

Dans sa définition la plus large de l'invention, les copolyamides dans la composition sont obtenus par polycondensation d'un lactame ou d'un aminoacide et/ou d'une diamine aliphatique linéaire avec un diacide carboxylique aliphatique linéaire en présence de jusqu'à 40% en poids d'un co-monomère à base de diamine cycloaliphatique.

On observe que les copolyamides selon la présente invention présentent une Tg plus élevée que l'homopolyamide aliphatique correspondant, tout en conservant leur caractère semi-cristallin. L'association de ces deux propriétés - caractère semi-cristallin et Tg plus élevée - confère à ces copolyamides d'excellentes propriétés mécaniques, notamment une rigidité qui reste stable à des températures élevées, notamment de 20 à 40°C et en particulier de 20 à 70°C, y compris en conditions humides, notamment de 0 à 100% d'humidité relative, et une bonne tenue chimique, notamment en termes de stress cracking. Les compositions formulées à base de ces copolyamides présentent par ailleurs une cinétique de cristallisation suffisamment rapide pour être adaptées aux procédés de transformation par moulage par injection.

Aussi, selon un premier aspect, l'invention a pour objet l'utilisation d'un copolyamide semicristallin étant de formule $A/X_1Y$, dans laquelle :

- A est un motif répétitif obtenu par polycondensation

    - d'au moins un lactame en $C_6$ à $C_{18}$, ou
    - d'au moins un aminoacide en $C_6$ à $C_{18}$, ou
    - d'au moins un motif répétitif XY obtenu par polycondensation d'au moins une diamine aliphatique linéaire (X) en $C_4$ à $C_{18}$ et d'au moins un acide dicarboxylique aliphatique linéaire (Y) en $C_6$ à $C_{18}$; et

- $X_1Y$ est un motif répétitif obtenu à partir de la polycondensation d'au moins une diamine cycloaliphatique ($X_1$), et d'au moins un acide dicarboxylique aliphatique linéaire (Y) en $C_6$ à $C_{18}$,

le ratio massique entre le comonomère A et le comonomère $X_1Y$ étant compris de 60/40 à 90/10 pour préparer des objets dont le module en traction, mesuré selon la norme ISO 527, ne varie pas plus de 20% entre l'état sec et l'état saturé en eau.

Selon un mode de réalisation, le module en traction, mesuré selon la norme ISO 527, ne varie pas plus de 10% entre l'état sec et l'état saturé en eau.

Selon un mode de réalisation, le module en traction, mesuré selon la norme ISO 527, ne varie pas plus de 20% dans l'intervalle de température compris de 20°C à 40°C.

Selon un mode de réalisation, le copolyamide semicristallin est de formule $A/X_1Y$, où A est un motif répétitif obtenu par polycondensation d'un lactame ou d'un aminoacide.

Selon un autre mode de réalisation, A est un motif répétitif XY obtenu à partir de la polycondensation d'au moins une diamine aliphatique linéaire (X) en $C_8$ à $C_{14}$ et d'au moins un acide dicarboxylique aliphatique (Y) en $C_8$ à $C_{14}$.

Selon un mode de réalisation, le copolyamide semicristallin est de formule $A/X_1Y$, où $X_1Y$ est un motif répétitif obtenu par polycondensation d'au moins une diamine cycloaliphatique ($X_1$) en $C_8$ à $C_{18}$ et d'au moins un acide dicarboxylique aliphatique (Y) en $C_8$ à $C_{12}$.

Selon un mode de réalisation, la au moins une diamine cycloaliphatique ($X_1$) est choisie parmi la 3,3'-diméthyl-4,4'-diamine-dicyclohexyl-méthane (BMACM ou MACM) et le bis-(p-aminocyclohexyl)-méthane (PACM) et leurs mélanges.

Selon un mode de réalisation, $X_1Y$ est un motif choisi parmi les motifs B10, B12, B14, B16, P10, P12, P14, P16 et l'un de leurs mélanges.

Selon un mode de réalisation, le ratio massique entre le motif A et le motif $X_1Y$ dans le copolyamide est compris de 70/30 à 80/20.

Selon un deuxième aspect, l'invention vise une composition, notamment utile pour le moulage par injection, comprenant :

- 25 à 65 % en poids d'au moins un copolyamide semicristallin tel que défini ci-dessus ;
- 35 à 75, en particulier 35 à 65, et tout particulièrement 50 à 60% en poids de renforts ;
- 0 à 10% en poids d'au moins un modifiant choc ; et

- 0 à 10 % en poids d'au moins un agent modulateur de viscosité ;
- 0 à 20 % en poids d'au moins une charge ; et
- 0 à 3 %, de préférence 1 à 2 % en poids d'additifs,

la somme des proportions de chaque constituant de ladite composition étant égale à 100%. Selon un mode de réalisation, le copolyamide semicristallin est choisi parmi le 1010/B10, 11/B10, 12/B10, 1012/B12, 11/B12, 12/B12, 1210/B10, 1212/B12, 1014/B14, 11/B14, 12/B14, 1016/B16, 11/B16, 12/B16, 1010/P10, 11/P10, 12/P10, 1012/P12, 11/P12, 12/P12, 1210/P10, 1212/P12, 1014/P14, 11/P14, 12/P14, 1016/P16, 11/P16 et 12/P16.

Selon un mode de réalisation, la composition comprend à titre de renforts des fibres de verre ou des fibres de carbone.

Selon un troisième aspect, l'invention vise un procédé de fabrication de la composition décrite ci-dessus, dans lequel l'on mélange les constituants de ladite composition par compoundage, notamment dans une extrudeuse bi-vis, un comalaxeur, ou un mélangeur interne.

Selon un quatrième aspect enfin, l'invention vise un article moulé susceptible d'être obtenu à partir de la composition décrite ci-dessus, par moulage par injection.

Selon un mode de réalisation, l'article moulé est choisi dans le groupe consistant en les pièces pour dispositifs portables, notamment des téléphones portables, montres connectées, ordinateurs, ou tablettes.

**[Description des modes de réalisation]**

**Définition des termes**

On entend par le terme « **copolymère** » désigner un polymère issu de la copolymérisation d'au moins deux types de monomères chimiquement différents, appelés co-monomères. Un copolymère est donc formé d'au moins deux motifs de répétition. Il peut également être formé de trois ou plus motifs de répétition.

On entend par le terme « **température de fusion** » désigner la température à laquelle un polymère au moins partiellement cristallin passe à l'état liquide visqueux, telle que mesurée par analyse calorimétrique différentielle (DSC) selon la norme NF EN ISO 11 357-3 en utilisant une vitesse de chauffe de 20°C/min.

On entend par le terme « **température de transition vitreuse** » désigner la température à laquelle un polymère au moins partiellement amorphe passe d'un état caoutchoutique vers un état vitreux, ou vice versa, telle que mesurée par analyse calorimétrique différentielle (DSC) selon la norme NF EN ISO 11 357-2 en utilisant une vitesse de chauffe de 20°C/min.

On entend par le terme « **température ambiante** » désigner la température de 23°C.

On entend par le terme « **polymère semi-cristallin** » désigner un polymère présentant une température de fusion (Tf) en DSC selon la norme ISO 11357-3 :2003, et une enthalpie de cristallisation supérieure à 20 J/g, de préférence supérieure à 30 J/g et en particulier supérieure à 40 J/g, telle que mesurée en DSC selon la même norme, avec une vitesse de 20K/min.

On entend par le terme « **humidité relative** », aussi appelée degré hygrométrique, caractériser l'humidité de l'air. L'humidité relative, mesurée au moyen d'un hygromètre, est exprimée par le ratio de la pression partielle de la vapeur d'eau sur la pression partielle de la vapeur d'eau saturante à la même température :

$$\varphi[\%] = \frac{P_{vap}}{P_{sat(T)}} \cdot 100$$

On entend par le terme « **sec** » caractériser un échantillon ayant été conservé après injection dans un sac en aluminium, à l'abri de l'humidité ambiante.

On entend par le terme « **saturé en eau** » caractériser un échantillon ayant été immergé dans l'eau à 23°C jusqu'à poids constant.

On entend par le terme « **prépolymère** » désigner des oligomères de polyamides de masse moléculaire moyenne en nombre comprise de 1000 à 5000 g /mole et de ce fait inférieure à celle des polyamides et copolyamides.

On entend par le terme « **module** » désigner la propriété mesurée pour les matériaux à base de polymères selon la norme ISO 527 pour la mesure du module de traction et ISO 178 pour la mesure du module de flexion. Dans le cadre du présent exposé, la stabilité du module est évaluée au niveau du module de traction, lequel est mesuré comme indiqué dans les exemples. On considère que le module est stable lorsqu'il ne varie, dans l'intervalle de température compris de 20 à 40°C , en particulier de 20 à 70°C, et dans une ambiance d'humidité relative de 0 à 100 %, de pas plus de 20%, et en particulier pas plus de 10%.

Plus spécifiquement, on considère deux modes de variations de module, à savoir $\Delta E_T$, la variation du module avec la température, et $\Delta E_h$, la variation du module avec l'humidité. Ces deux modes de variation du module sont calculés de la manière suivante, respectivement :

La variation du module avec la température $\Delta E_T$ se calcule par la formule suivante :

$$\Delta E_T(\%) = 100 - \frac{E_{T2}}{E_{T1}} \times 100$$

où $E_{T2}$ est le module à une température T2 et $E_{T1}$ est le module à température T1, mesurés selon la norme ISO 527, T2 étant une température supérieure à T1, et T1 étant notamment la température ambiante, pour un échantillon se trouvant à un état d'humidité donné.

La variation du module avec l'humidité $\Delta E_h$ se calcule par la formule suivante :

$$\Delta E_h(\%) = 100 - \frac{E_{h2}}{E_{h1}} \times 100$$

où $E_{h2}$ est le module d'un échantillon à l'état saturé en eau et $E_{h1}$ le module d'un échantillon à l'état sec, mesuré selon la norme ISO 527 à une même température, par exemple la température ambiante, ou une température de 40°C, 50°C, 60°C ou 70°C.

Selon l'invention, le copolyamide semicristallin utilisé présente une variation de module $\Delta E_h$ de20% maximum lorsque $E_{h2}$ est le module de l'échantillon saturé en eau et $E_{h1}$ est le module de l'échantillon sec à une température donnée, par exemple la température ambiante.

Selon un mode de réalisation, le copolyamide semicristallin utilisé présente une variation de module $\Delta E_h$ de 10% maximum lorsque $E_{h2}$ est le module de l'échantillon saturé en eau et $E_{h1}$ est le module de l'échantillon sec à une température donnée, par exemple la température ambiante.

De préférence, le copolyamide semicristallin utilisé présente une variation de module $\Delta E_T$ de 20% maximum lorsque T1 est la température ambiante et T2 est une température de 40°C, de préférence de 50°C, encore préféré de 60°C et tout particulièrement de 70°C.

Selon un mode de réalisation de l'invention, le copolyamide semicristallin utilisé présente une variation de module $\Delta E_T$ de 10% maximum lorsque T1 est la température ambiante et T2 est une température de 40°C, de préférence de 50°C, encore préféré de 60°C et tout particulièrement de 70°C.

Par l'expression « **modifiant choc** », il faut entendre un polymère à base polyoléfine présentant un module de flexion inférieur à 100 MPa mesuré à 23°C selon la norme ISO 178 :2010 et de Tg inférieur à 0°C (mesurée selon la norme 11357-2 au niveau du point d'inflexion du thermogramme DSC), en particulier une polyoléfine, couplée ou non avec un Peba (polyéther block amide) ayant un module de flexion < 200 MPa. On ne sortirait pas du cadre de l'invention en utilisant un Peba seul comme modifiant choc dans la composition.

L'expression « **temps de cycle adapté à sa mise en oeuvre** » signifie que le temps nécessaire pour la fabrication d'une pièce à partir de la composition de l'invention est compatible avec une fabrication industrielle. En particulier, on considère que le temps de cycle par injection, comprenant les étapes de l'injection, le refroidissement, l'ouverture du moule et l'éjection du produit formé, doit pouvoir s'effectuer en moins de 50 secondes, préférentiellement en moins de 40 secondes, notamment en moins de 30 secondes.

Dans l'ensemble du présent exposé, l'expression « **compris de ... à ...** » ou plage définie par exemple par « en $C_x$ à $C_y$ » signifie que les bornes sont incluses.

Enfin, la nomenclature utilisée pour définir les polyamides est décrite dans la norme ISO 1874-1 :2011 « Plastiques - Matériaux polyamides (PA) pour moulage et extrusion - Partie 1 : Désignation », notamment en page 3 (tableaux 1 et 2) et est bien connue de l'homme du métier.

Comme évoqué plus haut, les inventeurs ont observé de manière inattendue que la modification d'un polyamide semi-cristallin aliphatique par copolymérisation en présence d'une quantité spécifique de diamine cycloaliphatique ($X_1$) et de diacide aliphatique linéaire (Y) permettait d'obtenir un copolyamide adapté à l'utilisation dans des compositions dont le module de traction en milieu humide est stable, y compris à température élevée, tout en conservant un temps de cycle adapté à une mise en oeuvre par injection.

La présente invention vise donc principalement l'utilisation d'un copolyamide semicristallin de formule A/$X_1$Y, dans laquelle :

- A est un motif répétitif obtenu par polycondensation

  - d'au moins un lactame en $C_6$ à $C_{18}$, ou

- d'au moins un aminoacide en $C_6$ à $C_{18}$, ou
- d'au moins un motif répétitif XY obtenu par polycondensation d'au moins une diamine aliphatique linéaire (X) en $C_4$ à $C_{18}$ et d'au moins un acide dicarboxylique aliphatique linéaire (Y) en $C_6$ à $C_{18}$; et

- $X_1Y$ est un motif répétitif obtenu à partir de la polycondensation d'au moins une diamine cycloaliphatique ($X_1$), et d'au moins un acide dicarboxylique aliphatique linéaire (Y) en $C_6$ à $C_{18}$,

le ratio massique entre le motif A et le motif $X_1Y$ ($A/X_1Y$) étant compris de 60/40 à 90/10, pour préparer des objets dont le module en traction, mesuré selon la norme ISO 527, ne varie pas plus de 20%, avantageusement pas plus de 10%, dans l'intervalle de température compris de 20°C à 40°C et de préférence de 20°C à 70°C.

**Motif A = lactame.** Lorsque le motif répétitif A du copolyamide est obtenu par polycondensation d'un lactame, le lactame peut être notamment choisi parmi la pyrrolidinone, la 2-pipéridinone, le caprolactame, l'énantholactame, le caprylolactame, le pelargolactame, le décanolactame, l'undécanolactame, et le lauryllactame, en particulier le lauryllactame. Le lauryllactame est particulièrement préféré.

**Motif A = aminoacide.** Lorsque le motif répétitif A du copolyamide est obtenu par polycondensation d'un aminoacide, celui-ci peut être choisi notamment parmi l'acide 9-aminononanoïque, l'acide 10-aminodécanoïque, l'acide 10-aminoundécanoïque, l'acide 12-aminododécanoïque et l'acide 11-aminoundécanoïque ainsi que ses dérivés, notamment l'acide N-heptyl-11-aminoundécanoïque, en particulier l'acide 11-aminoundécanoïque. L'acide 11-aminoundécanoïque est particulièrement préféré.

**Motif A = XY, Diamine X.** Lorsque le motif répétitif A du copolyamide est obtenu par polycondensation d'une diamine X avec un diacide Y, la diamine (X) en $C_4$ à $C_{18}$ peut être notamment une diamine aliphatique linéaire, telle que la 1,4-butanediamine, 1,5-pentaméthylènediamine, 1,6-hexaméthylènediamine, 1,7-heptaméthylènediamine, 1,8-octaméthylènediamine, 1,9-nonaméthylènediamine, 1,10-décaméthylènediamine, 1,11-undécaméthylènediamine, 1,12-dodécaméthylènediamine, 1,13-tridécaméthylènediamine, 1,14-tétradécaméthylènediamine, 1,16-hexadécaméthylènediamine et 1,18-octadécaméthylènediamine. Avantageusement, la diamine (X) utilisée est en $C_8$ à $C_{14}$, en particulier choisi parmi la 1,8-octaméthylènediamine, la 1,9-nonaméthylènediamine, la 1,10-décaméthylènediamine, la 1,11-undécaméthylènediamine, 1,12-dodécaméthylènediamine, 1,13-tridécaméthylènediamine, 1,14-tétradécaméthylènediamine. Avantageusement, la diamine (X) utilisée est en $C_8$ à $C_{12}$, en particulier choisi parmi la 1,8-octaméthylènediamine, la 1,9-nonaméthylènediamine, la 1,10-décaméthylènediamine, 1,11-undécaméthylènediamine, la 1,12-dodécaméthylènediamine. Parmi ces diamines, la 1,10-décaméthylènediamine est particulièrement préférée.

La diamine aliphatique linéaire (X) peut être en mélange avec une ou plusieurs autres diamines aliphatiques X'.

**Motif A = XY, Diacide Y.** Lorsque le motif répétitif A du copolyamide est obtenu par polycondensation d'une diamine X avec un diacide Y, l'acide dicarboxylique aliphatique linéaire (Y) en $C_6$ à $C_{18}$ peut notamment être choisi parmi l'acide adipique, acide subérique, acide azélaïque, acide sébacique, acide undécanedioïque, acide dodécanedioïque, acide brassylique, acide tétradécanedioïque, acide pentadécanedioïque, acide hexadécanedioïque, acide octadécanedioïque.

De préférence, l'acide dicarboxylique aliphatique linéaire (Y) est en $C_8$ à $C_{14}$ et est choisi parmi l'acide subérique, acide azélaïque, l'acide sébacique, acide undécanedioïque, acide dodécanedioïque, acide brassylique, acide tétradécanedioïque. Selon un autre mode de réalisation, l'acide dicarboxylique aliphatique linéaire (Y) est en $C_8$ à $C_{12}$ et est choisi parmi l'acide subérique, acide azélaïque, l'acide sébacique, acide undécanedioïque et acide dodécanedioïque. L'acide sébacique, l'acide dodécanedioïque, l'acide tétradécanedioïque et l'acide hexadécanedioïque sont particulièrement préférés.

Lorsque A est un motif XY, l'acide dicarboxylique aliphatique linéaire (Y) du motif XY est identique à l'acide dicarboxylique aliphatique linéaire (Y) du motif $X_1Y$.

L'acide dicarboxylique aliphatique linéaire (Y) peut être en mélange avec un ou plusieurs autres acides dicarboxyliques aliphatiques linéaires Y'.

Cependant, lorsque l'acide dicarboxylique linéaire du motif répétitif XY est en mélange avec un autre acide dicarboxylique linéaire Y', alors le motif répétitif XY' est en proportion massique minoritaire par rapport à la somme de XY et XY'. Avantageusement, le ratio massique XY/XY' est compris de 90/10 à 99,9/0,1.

Lorsqu'il y a plusieurs diamines (X), (X')..., ainsi que plusieurs acides dicarboxyliques (Y), (Y')..., alors l'ensemble des motifs répétitifs de type XY contenant X' et/ou Y' est présent dans le copolyamide en proportion massique supérieure ou égale à 65% et de préférence supérieure ou égale à 70%.

Un copolyamide comportant un mélange de motif répétitif aliphatique XY avec un ou plusieurs motifs répétitifs issus de la polycondensation de lactames ou d'aminoacide est cependant exclu du champ de l'invention.

**Motif $X_1Y$, diamine $X_1$.** S'agissant du motif répétitif $X_1Y$, la diamine ($X_1$) est une diamine cycloaliphatique. Il peut s'agir notamment d'une diamine cycloaliphatique en $C_8$ à $C_{18}$. La diamine cycloaliphatique peut être notamment choisie parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclo-

hexyl)-méthane ou 3,3'-diméthyl-4,4'-diamino-dicyclohexyl-méthane couramment dénommé (BMACM) ou (MACM) (et noté B ci-après), le bis-(p-aminocyclohexyl)-méthane couramment dénommé (PACM) (et noté P ci-après), en particulier la Dicykan®, l'isopropylidènedi(cyclohexylamine) couramment dénommé (PACP), l'isophorone-diamine (notée IPD ci-après) et le 2,6-bis(amino méthyl)norbornane couramment dénommé (BAMN). Les diamines cycloaliphatiques 3,3'-diméthyl-4,4'-diamino-dicyclohexyl-méthane (BMACM ou MACM) et le bis-(p-aminocyclohexyl)-méthane (PACM) et leurs mélanges sont préférées.

**Motif $X_1Y$, diacide Y.** Comme évoqué plus haut, l'acide dicarboxylique linéaire (Y) du motif répétitif $X_1Y$ est identique à celui du motif répétitif XY et donc tel que défini ci-dessus.

Avantageusement, le motif $X_1Y$ est choisi parmi les B10, B12, B14, B16, P10, P12, P14, P16 et l'un de leurs mélanges.

Lorsque l'acide dicarboxylique linéaire du motif répétitif $X_1Y$ est en mélange avec un autre acide dicarboxylique linéaire Y' tel que décrit ci-dessus, alors le motif répétitif $X_1Y'$ est en proportion massique minoritaire par rapport à la somme de $X_1Y$ et $X_1Y'$. Avantageusement, le ratio massique $X_1Y/X_1Y'$ est compris de 90/10 à 99,9/0,1.

**Ratio $A/X_1Y$** Le ratio massique entre le motif A et le motif $X_1Y$ dans le copolyamide est compris de 60/40 à 90/10, et de préférence compris de 70/30 à 80/20.

Au-delà de 40% massique de $X_1Y$ dans le copolyamide, la composition présente des difficultés de mise en oeuvre et notamment des difficultés d'éjection du moule, un temps de cycle long en raison de la cristallisation trop lente car trop affectée par le taux de co-monomères et notamment incomplète.

En deçà de 10% massique de $X_1Y$ dans le copolyamide, la composition risque de présenter un module qui chute fortement en atmosphère humide, notamment à température élevée.

Selon certains modes de réalisation, le ratio massique entre le motif A et le motif $X_1Y$ peut varier de 60/40 à 61/39; ou de 61/39 à 62/38; ou de 62/38 à 63/37; ou de 63/37 à 64/36; ou de 64/36 à 65/35; ou de 65/35 à 66/34; ou de 66/34 à 67/33; ou de 67/33 à 68/32; ou de 68/32 à 69/31; ou de 69/31 à 70/30; ou de 70/30 à 71/29; ou de 71/29 à 72/28; ou de 72/28 à 73/27 ; ou de 73/27 à 74/26; ou de 74/26 à 75/25 ; ou de 75/25 à 76/24; ou de 76/24 à 77/23 ; ou de 77/23 à 78/22; ou de 78/22 à 79/21; ou de 79/21 à 80/20 ; ou de 80/20 à 81/19; ou de 81/19 à 82/18; ou de 82/18 à 83/17; ou de 83/17 à 84/16; ou de 84/16 à 85/15; ou de 85/15 à 86/14; ou de 86/14 à 87/13; ou de 87/13 à 88/12; ou de 88/12 à 89/11; ou de 89/11 à 90/10.

Un copolyamide comportant un ratio massique entre le motif A et le motif $X_1Y$ compris dans la plage de 70/30 à 80/20 est particulièrement adapté.

**Copolyamides $A/X_1Y$ préférés.** De préférence, le motif répétitif A est obtenu par polycondensation d'un seul lactame, ou d'un seul aminoacide ou d'un seul motif XY et le motif $X_1Y$ correspond également à un seul motif répétitif. Le copolyamide selon ce mode de réalisation est alors constitué uniquement de deux motifs répétitifs.

Selon un mode de réalisation particulier, le copolyamide $A/X_1Y$ tel que décrit ci-dessus est choisi parmi 1010/B10, 11/B10, 12/B10, 1012/B12, 11/B12, 12/B12, 1210/B10, 1212/B12, 1014/B14, 11/B14, 12/B14, 1016/B16, 11/B16, 12/B16, 1010/P10, 11/P10, 12/P10, 1012/P12, 11/P12, 12/P12, 1210/P10, 1212/P12, 1014/P14, 11/P14, 12/P14, 1016/P16, 11/P16 et 12/P16. Parmi ces copolyamides, on peut mentionner en particulier les 1010/B10, 11/B10 et 12/B10, notamment avec une teneur en poids de 10% à 35%, et tout particulièrement de 20 à 30% de B10.

Le copolyamide tel que décrit ci-dessus est par ailleurs semi-cristallin. De préférence, il présente une enthalpie de cristallisation supérieure à 20 J/g, de préférence supérieure à 30 J/g et en particulier supérieure à 40 J/g, telle que mesurée en DSC selon la norme ISO 11357-3 :2003 avec une vitesse de 20K/min.

**Procédé de fabrication du copolyamide.** Les copolyamides décrits ci-dessus peuvent être préparés selon des procédés de préparation connus en soi, notamment par polycondensation des co-monomères dans des conditions bien connues de l'homme du métier (voir par exemple « Nylon Plastics Handbook », édité par Melvin I. Kohan, Hanser Publishers, 1995).

**Compositions.** Selon un deuxième aspect, la présente invention vise une composition, notamment utile pour le moulage par injection, comprenant :

- 25 à 65 % en poids d'au moins un copolyamide semi-cristallin tel que décrit ci-dessus ;
- 35 à 75, en particulier 35 à 65, et tout particulièrement 50 à 60% en poids de renforts ;
- 0 à 10 % en poids d'au moins un modifiant choc ;
- 0 à 10 % en poids d'au moins un agent modulateur de viscosité ;
- 0 à 20 % en poids d'au moins une charge ; et
- 0 à 3 %, de préférence 1 à 2 % en poids d'additifs,

la somme des proportions de chaque constituant de ladite composition étant égale à 100%.

**Copolyamide semicristallin.** Le copolyamide semicristallin dans la composition est de formule $A/X_1Y$, dans laquelle A, X1 et Y ont la signification mentionnée ci-dessus.

Selon un mode de réalisation, le copolyamide $A/X_1Y$ tel que décrit ci-dessus est choisi parmi 1010/B10, 11/B10, 12/B10, 1012/B12, 11/B12, 12/B12, 1210/B10, 1212/B12, 1014/B14, 11/B14, 12/B14, 1016/B16, 11/B16, 12/B16, 1010/P10, 11/P10, 12/P10, 1012/P12, 11/P12, 12/P12, 1210/P10, 1212/P12, 1014/P14, 11/P14, 12/P14, 1016/P16, 11/P16, 12/P16, et leurs mélanges.

La composition peut comprendre un, deux, trois ou plus de trois copolyamides différents.

Selon certains modes de réalisation, la composition comprend ledit copolyamide semicristallin dans une teneur qui peut varier de 25 à 30% en poids; ou de 30 à 35% en poids; ou de 35 à 40% en poids ; ou de 40 à 45% en poids; ou de 45 à 50% en poids; ou de 50 à 55% en poids; ou de 55 à 60% en poids; ou de 60 à 65% en poids.

Selon un mode de réalisation, la composition comprend 30 à 60% en poids, et en particulier de 40 à 50% en poids dudit copolyamide semicristallin, par rapport au poids total de la composition.

**Renforts.** Afin de répondre aux exigences en termes de module, la composition peut contenir des renforts.

En effet, l'addition de renforts dans la composition permet d'augmenter certaines des propriétés mécaniques, notamment le module. La nature et la quantité de renforts peuvent être adaptées à la valeur du module recherchée, qui peut ainsi atteindre des valeurs très nettement supérieures à 3 GPa, par exemple supérieure à 12 GPa, voire supérieure à 15 GPa, et en particulier de l'ordre de 20 GPa.

Par renforts, on entend les billes, les fibres courtes, des broyats ou encore des farines. Ces renforts peuvent notamment être en verre, en carbone ou en polymère. Particulièrement préférés sont des renforts choisis parmi les billes de verre, des fibres de verre, des fibres de carbone, ou des fibres polymériques. Il est possible d'associer plusieurs types de renforts. Les fibres de verre et les fibres de carbone sont les renforts particulièrement préférés.

Par fibre de verre, on entend toute fibre de verre, notamment telle que décrite par Frederick T. Wallenberger, James C. Watson and Hong Li, PPG industries Inc. (ASM Handbook, Vol 21 : composites (#06781G), 2001 ASM International).

Parmi les fibres de verre, on peut mentionner notamment les fibres de verre à section circulaire et les fibres de verre à section non-circulaire, telle que ovale ou plate, rectangulaire ou encore bi-lobée. Les fibres de verre peuvent être caractérisées par un ratio L/D (L étant la grande dimension et D la petite dimension de la section transverse). Pour des fibres de section circulaire, le ratio L/D est égal à environ 1. Pour les fibres à section non-circulaire, telles que les fibres plates, le ratio L/D est compris de 2 à 8, en particulier de 2 à 4.

Par ailleurs, le diamètre des fibres à section circulaire, quelle que soit leur composition est généralement compris de 4 $\mu$m à moins de 25 $\mu$m, de préférence de 4 à 15 $\mu$m.

Les fibres polymériques ou fibres de polymère peuvent être notamment choisies parmi :

- les fibres de polymères thermodurcissables et plus particulièrement les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde,
- les fibres de polymères thermoplastiques et plus particulièrement le polyéthylène téréphtalate (PET) et le polybutylène téréphtalate (PBT),
- les fibres de polyamides,
- les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
- les fibres de copolymères blocs de polyamide tel que le polyamide/polyéther, les fibres de polyaryléthers cétones (PAEK) telles que la polyétheréther cétone (PEEK), la polyéthercétone cétone (PEKK) et la polyéthercétoneéthercétone cétone (PEKEKK).

Selon certains modes de réalisation, la teneur en renforts dans la composition peut varier de 35 à 40% en poids; ou de 40 à 45% en poids; ou de 50 à 55% en poids ; ou de 55 à 60% en poids ; ou de 60 à 65% en poids ; ou de 65 à 70% en poids ; ou de 70 à 75% en poids.

Selon un mode de réalisation, la composition comprend entre 35 à 75%, avantageusement entre 35 et 65%, et préférentiellement entre 50 et 60% en poids de renforts, par rapport au poids total de la composition.

**Modifiant choc.** La composition peut en outre comporter un ou plusieurs modifiants chocs tels que définis ci-dessus. La présence d'un modifiant choc permet de conférer une plus grande ductilité aux articles fabriqués.

La polyoléfine du modifiant choc peut être fonctionnalisée ou non fonctionnalisée ou comporter l'un et l'autre en mélange.

Lorsque la polyoléfine est fonctionnalisée, une partie ou la totalité des polyoléfines portent une fonction choisie parmi les fonctions acide carboxylique, anhydride carboxylique et époxyde. La fonction peut en particulier être choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère éthylène-octène, un terpolymère éthylène-acrylate d'alkyle-anhydride maléique.

Les Peba (polyéther block amides) sont des copolymères comportant des blocs à motif polyamide et des blocs à motif polyéther. Ils peuvent également comporter des fonctions ester, notamment issu de la réaction de condensation de fonctions carboxyliques terminales des blocs polyamide avec les fonctions hydroxyle des blocs polyéther. Les Peba sont disponibles dans le commerce, notamment sous la marque Pebax® par la société Arkema.

Avantageusement, le modifiant choc est choisi parmi le Fusabond® F493, un Pebax®, en particulier le Pebax® 40R53 SP01, un Lotader®, en particulier le Lotader® 5500 ou le Lotader® 7500, le Exxelor® VA1803, ou un mélange de ceux-ci, dans ce cas ils sont dans un rapport compris de 0,1/99,9 à 99,9/0,1, préférentiellement 1/2 à 2/1 lorsqu'ils sont en mélange de deux. A titre d'exemple, le modifiant choc est choisi parmi les mélanges suivants : Fusabond® 493/Lotader®, en particulier Fusabond® 493/Lotader® 5500 ou Fusabond® 493/Lotader® 7500.

Le modifiant choc peut également être un modifiant de type « core-shell », également désigné « copolymère de type coeur-écorce ». Le modifiant de type « core-shell » se présente sous la forme de fines particules ayant un coeur en élastomère et au moins une écorce thermoplastique, la taille des particules est en général inférieure au $\mu$m et avantageusement comprise de 150 à 500 nm. Le modifiant de type « core-shell » possède une base acrylique ou butadiène contrairement au modifiant choc qui possède une base polyoléfine.

Plusieurs modifiants chocs différents peuvent être présents dans la composition.

Selon certains modes de réalisation, la teneur en modifiant choc dans la composition peut varier de 0 à 10% en poids; ou de 1 à 2% en poids; ou de 2 à 3% en poids ; ou de 3 à 4% en poids; ou de 4 à 5% en poids; ou de 5 à 6% en poids ; ou de 6 à 7% en poids; ou de 7 à 8% en poids; ou de 8 à 9% en poids ; ou de 9 à 10% en poids.

Selon un mode de réalisation, la composition comprend de 1 à 8, et en particulier de 2 à 5 % en poids de modifiant choc par rapport au poids total de la composition.

**Agents modulateurs de viscosité.** La composition peut par ailleurs comporter des agents pour réguler la viscosité. Le ou les agents de viscosité peuvent être notamment choisis parmi les prépolymères. Le prépolymère peut être choisi parmi les oligomères de polyamides aliphatiques, linéaires ou ramifiés, cycloaliphatiques, semi-aromatiques ou encore aromatiques. Le prépolymère peut également être un oligomère de copolyamide ou un mélange d'oligomères de polyamide et de copolyamide. De préférence, le prépolymère présente une masse molaire moyenne en nombre Mn comprise de 1000 à 5000 g/mol. Il peut s'agir par exemple d'un prépolymère comportant un seul groupe terminal amine tel qu'obtenu en présence d'une monoamine en tant que limiteur de chaînes. La masse molaire en nombre (Mn) ou l'indice d'amine est calculé selon la formule suivante : Mn = 1000/[NH$_2$], [NH$_2$] étant la concentration de fonctions amine dans le copolyamide telle que déterminée par exemple par potentiométrie.

Selon certains modes de réalisation, la teneur en agent de viscosité dans la composition peut varier de 0 à 10% en poids; ou de 1 à 2% en poids; ou de 2 à 3% en poids ; ou de 3 à 4% en poids; ou de 4 à 5% en poids; ou de 5 à 6% en poids; ou de 6 à 7% en poids; ou de 7 à 8% en poids; ou de 8 à 9% en poids; ou de 9 à 10% en poids. Selon un mode de réalisation, la composition comprend de 1 à 4%, et en particulier de 2 à 3 % en poids d'agent de viscosité par rapport au poids total de la composition.

**Charges.** La composition peut également comporter des charges autres que les renforts discutés ci-dessus. Les charges envisagées incluent les charges minérales classiques, telles que le kaolin, la magnésie, les scories, le noir de carbone, les nanotubes de carbone, le graphite expansé ou non, la wollastonite, l'oxyde de titane, les charges antistatiques, les nanocharges telles que les nanotubes de carbone, ou encore les agents ignifugeants.

Les ignifugeants peuvent être un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique.

Selon certains modes de réalisation, la teneur en charges dans la composition peut varier de 0 à 1% en poids; ou de 1 à 2% en poids; ou de 2 à 3% en poids ; ou de 3 à 4% en poids; ou de 4 à 5% en poids; ou de 6 à 7% en poids; ou de 7 à 8% en poids; ou de 8 à 9% en poids ; ou de 9 à 10% en poids ; ou de 10 à 11% en poids ; ou de 11 à 12% en poids ; ou de 12 à 13% en poids ; ou de 13 à 14% en poids ; ou de 14 à 15% en poids ; ou de 15 à 16% en poids ; ou de 16 à 17% en poids ; ou de 17 à 18% en poids ; ou de 18 à 19% en poids ; ou de 19 à 20% en poids.

Selon un mode de réalisation, la composition comprend de 1 à 18%, en particulier de 2 à 15 % et tout particulièrement 5 à 10% en poids de charges par rapport au poids total de la composition.

**Additifs.** Les additifs optionnellement présents dans la composition sont les additifs classiques utilisés dans les polyamides et bien connus de l'homme du métier tels que les colorants, stabilisants, agents tensioactifs, agents nucléants, pigments, azurants, antioxydants, lubrifiants, cires ainsi que leurs mélanges.

Les stabilisants peuvent être des stabilisants organiques ou minéraux. Les stabilisants usuels utilisés avec des polymères sont par exemple des phénols, des phosphites, des absorbeurs UV, des stabilisants du type HALS (Hindered Amine Light Stabiliser), des iodures métalliques. On peut citer l'Irganox 1010, 245, 1098, l'Irgafos 168, 126, le Tinuvin 312, 770, l'Iodide P201 de la société Ciba, le Nylostab S-EED de la société Clariant.

Des agents nucléants peuvent être intéressants dans la composition de l'invention afin d'accélérer la cristallisation et ainsi réduire le temps de cycle lors de l'injection. Ainsi, il est préféré d'ajouter un agent nucléant lorsque le copolyamide dans la composition présente une teneur élevée en motif $X_1Y$, par exemple un ratio massique entre le motif A et le motif $X_1Y$ ($A/X_1Y$) compris de 60/40 à 70/30.

Les agents nucléants peuvent être choisis notamment parmi l'oxyde métallique, les particules métalliques, la silice, l'alumine ou l'argile ou le talc.

Les lubrifiants peuvent être notamment un stéarate ou un liant de cire.

Les cires peuvent en particulier être une cire amorphe telle qu'une cire d'abeille, une cire de silicone, une cire de polyéthylène, une cire de polyéthylène oxydé, une cire de copolymère d'éthylène, une cire de montane et une cire de polyéther.

Plusieurs additifs différents, de la même catégorie ou de catégories différentes peuvent être présents dans la composition.

Selon certains modes de réalisation, la teneur en additif dans la composition peut varier de 0 à 0.5% en poids; ou de 0.5 à 1% en poids ; ou de 1 à 1,5% en poids ; ou de 1,5 à 2% en poids; ou de 2 à 2,5% en poids ; ou de 2.5 à 3% en poids.

Selon un mode de réalisation, la composition comprend de 0.5 à 3 %, et en particulier de 1 à 2 % en poids d'additif par rapport au poids total de la composition.

Les compositions décrites permettent d'obtenir des pièces dont le module est peu affecté par l'humidité et par la température dans l'intervalle compris de 20 à 40°C, et de préférence de 20 à 70°C.

**Compositions préférées.** Selon certains modes de réalisation, la composition comprend:

- 25 à 65 % en poids d'au moins un copolyamide semi-cristallin, notamment choisi parmi le PA 1010/B10, 11/B10, 12/B10, 1012/B12, 11/B12, 12/B12, 1210/B10, 1212/B12, 1014/B14, 11/B14, 12/B14, 1016/B16, 11/B16, 12/B16, 1010/P10, 11/P10, 12/P10, 1012/P12, 11/P12, 12/P12, 1210/P10, 1212/P12, 1014/P14, 11/P14, 12/P14, 1016/P16, 11/P16, 12/P16 et leurs mélanges ;
- 35 à 75, en particulier 35 à 65, et tout particulièrement 50 à 60% en poids de renforts, notamment de fibres de verre ou fibres de carbone ;
- 0 à 10% en poids d'au moins un modifiant choc ; et
- 0 à 10 % en poids d'au moins un agent modulateur de viscosité ;
- 0 à 20 % en poids d'au moins une charge ; et
- 0 à 3 %, de préférence 1 à 2 % en poids d'additifs,

la somme des proportions de chaque constituant de ladite composition étant égale à 100%.

**Procédé de fabrication de la composition.** Selon un troisième objet, l'invention concerne un procédé de préparation de la composition telle que définie ci-dessus.

La composition peut être fabriquée par l'un quelconque des procédés de fabrication habituels de mélanges polymériques avec des renforts et/ou des charges, dans la mesure où il permet l'obtention de la composition sous forme de mélange homogène. Ces procédés peuvent notamment être choisis parmi l'extrusion à l'état fondu, le compactage et le malaxeur à rouleau.

Plus particulièrement, la composition selon l'invention peut être préparée par mélange à l'état fondu de tous les ingrédients dans un procédé dit en direct, notamment par compoundage sur un outil connu de l'homme de l'art tel qu'une extrudeuse bi-vis, un comalaxeur, ou un mélangeur interne.

Lorsque la fabrication a lieu par compoundage, la composition est généralement obtenue sous forme de granulés, ou éventuellement sous forme de masse en fusion. Le procédé de préparation de la composition peut aussi utiliser une extrudeuse bi-vis alimentant, sans granulation intermédiaire, une presse à injecter ou une extrudeuse selon un dispositif de mise en oeuvre connu par l'homme de l'art.

La composition obtenue peut être ensuite transformée pour une utilisation ou une transformation ultérieure, notamment par injection. En raison notamment de sa vitesse de cristallisation suffisamment élevée, la composition décrite est particulièrement intéressante pour la fabrication d'articles par moulage par injection ou par multi-injection. De préférence, la vitesse de cristallisation de la composition est suffisante pour permettre un temps de cycle inférieur à 50 secondes.

**Article.** Selon un quatrième objet, l'invention concerne un article moulé susceptible d'être obtenu à partir de la composition décrite ci-dessus. Il s'agit en particulier d'un article obtenu par moulage par injection de la composition telle que définie ci-dessus. Du fait de son module stable, l'article sera particulièrement aisé à assembler dans des conditions de température et humidité étendues. Par ailleurs, il pourra être utilisé même dans des climats difficiles du fait de son module stable.

Parmi ces articles, on peut mentionner les articles ou éléments pour l'électronique et l'informatique, et parmi ceux-ci notamment les articles destinés à des dispositifs portables, par exemple des pièces de téléphones portables, de montres connectées, d'ordinateurs, ou encore de tablettes.

Par ailleurs, on peut envisager des articles de sport, comme les éléments de chaussures de sport, des ustensiles de sport tels que des battes de sport, des planches, des fers à cheval, des palmes, des balles de golf, des véhicules de loisirs, en particulier ceux destinés aux activités par temps chaud et/ou humide.

On peut également mentionner d'une manière générale, les articles de loisirs, de bricolage, les outils et équipements de voirie soumis aux agressions climatiques et les articles de protection, tels que les visières des casques.

On peut citer aussi les éléments de voiture, tels que protège-phares, rétroviseurs, petites pièces de voitures tout terrain, et les réservoirs, en particulier de cyclomoteurs, motos et scooters.

Avantageusement, ledit article se présente sous la forme d'une pièce injectée. La pièce injectée peut être une pièce de téléphone, en particulier une coque de téléphone, de montre connectée, ou une pièce d'ordinateur ou de tablette.

Selon un autre aspect, la présente invention concerne un procédé de mise en forme d'un objet tel que défini ci-dessus, caractérisé en ce qu'il comprend une étape d'injection d'une composition telle que ci-dessus définie.

L'invention sera expliquée plus en détail dans les exemples qui suivent.

**[Exemples]**

**Exemple 1 : Préparation de compositions de (co)polyamides avec renforts de fibres de verre**

Afin de comparer le comportement du module à température et/ou humidité relative élevée, on a préparé des compositions de (co)polyamides tels qu'indiqués dans les tableaux 1 et 2 ci-dessous.

**Synthèse**

Les (co)polyamides ont été obtenus par la réaction de polycondensation de diamines et d'acides dicarboxyliques. La réaction est conduite en milieu fondu dans les conditions décrites dans le paragraphe suivant.

On charge l'ensemble des monomères d'intérêt (selon les cas, l'acide 11-aminoundécanoïque, l'hexaméthylènediamine, la 1,10-décaméthylènediamine, la BMACM, la m-xylylènediamine et/ou l'acide sébacique) dans un réacteur équipé d'un agitateur selon le ratio massique indiqué dans les tableaux 1, 2 et 3 ci-dessous. Afin d'améliorer l'échange thermique et faciliter la fusion des monomères, on ajoute 15% d'eau par rapport à la quantité totale de monomères.

Le réacteur est ensuite inerté par des cycles vide/azote pour enlever l'oxygène résiduel et éviter ainsi l'oxydation et des éventuelles réactions secondaires. Ensuite, le mélange réactionnel est chauffé à un premier palier à 170-180°C sous 8 bar. Après une heure dans ces conditions, la température du mélange est augmentée à 240°C pour une pression de 17 bars. Ensuite, on détend jusqu'à pression atmosphérique tout en augmentant progressivement la température pour atteindre 255°C. A cette température, on réalise la réaction de polycondensation sous balayage d'azote. La réaction est terminée lorsque la viscosité cible est atteinte. Le (co)polyamide obtenu est ensuite extrudé et granulé.

**Compoundage**

Les compositions ont été préparées par mélange à l'état fondu des granulés de copolymères, dans une extrudeuse bi-vis co-rotative type MC26 avec un profil de température (T°) plat à 270°C. La vitesse de vis est de 250 rpm. L'introduction des fibres de verre à section circulaire (Nittobo CSX3J451S0) est effectuée en gavage latéral selon le ratio décrit dans les tableaux 1,2 et 3.

**Exemple 2 : Variation du module de traction $\Delta E_h$**

Afin d'évaluer l'impact de l'humidité sur le module de traction, on a mesuré le module de traction d'éprouvettes des compositions obtenues sur une machine de traction MTS 810 (fabriquée par la société Material Testing Systems) pour une vitesse de traverse de 2.5 mm/min, et à température ambiante. L'essai a été ensuite répété après immersion des éprouvettes dans l'eau à 23°C jusqu'à poids constant.

Pour la préparation des éprouvettes, on a d'abord préparé des plaques de 100*100*1 $mm^3$ par injection des compositions obtenues dans les conditions suivantes :

- Température d'injection (alimentation/buse) : 250/270°C

- Température du moule : 50°C

Le temps de cycle est ajusté en fonction des compositions pour permettre l'injection des compositions. Dans les plaques obtenues, on a découpé ensuite, dans le sens de l'injection, des éprouvettes aux dimensions selon la norme ISO 527 1 BA, mais avec 1 mm d'épaisseur. Les résultats sont rassemblés dans le tableau 1 ci-dessous.

[Tableau 1]

| Comp. | (Co)polyamide | Ratio massique entre les motifs répétitifs | Fibres de verre [% en poids] | $\Delta E_h$ à 23°C [%] |
|---|---|---|---|---|
| C1 | PA 610 | NA | 50 | 41 |
| I1 | PA 610/B10 | 80/20 | 50 | 14 |
| I2 | PA 610/B10 | 70/30 | 50 | 14 |

L'ensemble des résultats met en évidence que l'utilisation de copolyamides selon l'invention (I1 et I2), obtenus par copolymérisation en présence de diamine cycloaliphatique, permet de limiter fortement la variation du module de traction d'une éprouvette saturée d'eau à température ambiante comparé au homopolyamide correspondant (C1).

**Exemple 3 : Variation du module de traction $\Delta E_h$ et $\Delta E_T$**

Afin d'évaluer le comportement du module de traction des copolyamides dans des conditions humides et à différentes températures, on a mesuré le module de traction de films de différentes compositions sur un équipement DMA Q800 de -80°C à 90°C avec une vitesse de chauffe de 2°C/min pour une sollicitation en traction. L'essai a été effectué sur des échantillons secs et sur des échantillons saturés par immersion dans l'eau à 23°C jusqu'à poids constant. On calcule ensuite $\Delta E_h$ à partir du ratio du module du matériau saturé en eau sur le module du matériau à l'état sec pour chaque température selon la formule indiquée plus haut. Les résultats sont rassemblés dans le tableau 2 ci-dessous.
On calcule également $\Delta E_T$ à partir des ratios du module du matériau à 50°C et à 70°C sur le module du matériau à 23°C, selon la formule indiquée plus haut avec T1=23°C. Ces calculs sont effectués pour le matériau à l'état sec. Les résultats sont rassemblés dans le tableau 3 ci-dessous.
Les films d'une épaisseur de 500 microns des différentes compositions ont été réalisés par moulage par compression.

[Tableau 2]

| Comp. | Polyamide | Ratio massique entre les motifs répétitifs | Fibres de verre [% en poids] | $\Delta E_h$ à 35°C [%] | $\Delta E_h$ à 40°C [%] |
|---|---|---|---|---|---|
| C2 | PA 1010 | NA | 50 | 32 | 49 |
| C3 | PA 1010/MXD10 | 80/20 | 50 | 28 | 45 |
| C4 | PA 11 | NA | 50 | 32 | 49 |
| I3 | PA 1010/B10 | 80/20 | 50 | -5 | 5 |
| I4 | PA 1010/B10 | 75/25 | 50 | -8 | 3 |
| I5 | PA 11/B10 | 75/25 | 50 | -8 | 3 |

[Tableau 3]

| Comp. | Polyamide | Ratio massique entre les motifs répétitifs | Fibres de verre [% en poids] | $\Delta E_T$ (T2=50°C, échantillon sec) [%] | $\Delta E_T$ (T2=70°C, échantillon sec) [%] |
|---|---|---|---|---|---|
| C2 | PA 1010 | NA | 50 | 9 | 32 |
| C4 | PA11 | NA | 50 | 9 | 32 |
| I4 | PA 1010/B10 | 75/25 | 50 | 3 | 9 |
| I5 | PA 11/B10 | 75/25 | 50 | 3 | 9 |

L'étude de la variation du module de traction $\Delta E_h$ à température élevée révèle d'une part un effet favorable de compositions de copolyamides selon l'invention (I3, I4 et I5) comportant un co-monomère à base de diamine cycloaliphatique, comparé à l'homopolymère correspondant (C2 et C4). D'autre part, on observe que l'effet favorable ne se produit pas pour un copolyamide obtenu avec une diamine arylaliphatique selon la composition comparative C3.

Enfin, l'étude de la variation du module de traction $\Delta E_T$ montre que les compositions de copolyamides selon l'invention (I4 et I5) ont un module largement plus stable avec la température que l'homopolymère correspondant (C2 et C4).

Les résultats expérimentaux démontrent donc l'effet avantageux en termes de stabilité du module avec la température et l'humidité de formulations comprenant un copolyamide semicristallin A/$X_1$Y selon l'invention.

**Liste des documents cités**

EP 2 113 535 A1

US 8,586,664 B2

FR 1758829

**Revendications**

1. Utilisation d'un copolyamide semicristallin étant de formule A/$X_1$Y, dans laquelle :

    - A est un motif répétitif obtenu par polycondensation

        - d'au moins un lactame en $C_6$ à $C_{18}$, ou
        - d'au moins un aminoacide en $C_6$ à $C_{18}$, ou
        - d'au moins un motif répétitif XY obtenu par polycondensation d'au moins une diamine aliphatique linéaire (X) en $C_4$ à $C_{18}$ et d'au moins un acide dicarboxylique aliphatique linéaire (Y) en $C_6$ à $C_{18}$; et

    - $X_1$Y est un motif répétitif obtenu à partir de la polycondensation d'au moins une diamine cycloaliphatique ($X_1$), et d'au moins un acide dicarboxylique aliphatique linéaire (Y) en $C_6$ à $C_{18}$,

    le ratio massique entre le comonomère A et le comonomère $X_1$Y étant compris de 60/40 à 90/10 pour préparer des objets dont le module en traction, mesuré selon la norme ISO 527, ne varie pas plus de 20% entre l'état sec et l'état saturé en eau.

2. Utilisation selon la revendication 1, dans laquelle le module en traction, mesuré selon la norme ISO 527, ne varie pas plus de 10% entre l'état sec et l'état saturé en eau.

3. Utilisation selon la revendication 1 ou 2, dans laquelle le module en traction, mesuré selon la norme ISO 527, ne varie pas plus de 20% dans l'intervalle de température compris de 20°C à 40°C.

4. Utilisation selon l'une des revendications 1 à 3, dans lequel dans le copolyamide semicristallin de formule A/$X_1$Y, où A est un motif répétitif obtenu par polycondensation d'un lactame ou d'un aminoacide.

5. Utilisation selon la revendication 4, dans lequel A est un motif répétitif XY obtenu à partir de la polycondensation d'au moins une diamine aliphatique linéaire (X) en $C_8$ à $C_{14}$ et d'au moins un acide dicarboxylique aliphatique (Y) en $C_8$ à $C_{14}$.

6. Utilisation selon l'une des revendications 1 à 5, dans lequel dans le copolyamide semicristallin de formule A/$X_1$Y, où $X_1$Y est un motif répétitif obtenu par polycondensation d'au moins une diamine cycloaliphatique ($X_1$) en $C_8$ à $C_{18}$ et d'au moins un acide dicarboxylique aliphatique (Y) en $C_8$ à $C_{12}$.

7. Utilisation selon l'une des revendications 1 à 6, dans lequel la au moins une diamine cycloaliphatique ($X_1$) est choisie parmi la 3,3'-diméthyl-4,4'-diamine-dicyclohexyl-méthane (BMACM ou MACM) et le bis-(p-aminocyclohexyl)-méthane (PACM) et leurs mélanges.

**8.** Utilisation selon l'une des revendications 1 à 7, dans lequel $X_1Y$ est un motif choisi parmi les motifs B10, B12, B14, B16, P10, P12, P14, P16 et l'un de leurs mélanges.

**9.** Utilisation selon l'une des revendications 1 à 8, dans lequel le ratio massique entre le motif A et le motif $X_1Y$ dans le copolyamide est compris de 70/30 à 80/20.

**10.** Composition, notamment utile pour le moulage par injection, comprenant :

- 25 à 65 % en poids d'au moins un copolyamide semicristallin tel que défini dans l'une des revendications 1 à 9 ;
- 35 à 75, en particulier 35 à 65, et tout particulièrement 50 à 60% en poids de renforts ;
- 0 à 10% en poids d'au moins un modifiant choc ; et
- 0 à 10 % en poids d'au moins un agent modulateur de viscosité ;
- 0 à 20 % en poids d'au moins une charge ; et
- 0 à 3 %, de préférence 1 à 2 % en poids d'additifs,

la somme des proportions de chaque constituant de ladite composition étant égale à 100%.

**11.** Composition selon la revendication 10, dans laquelle le copolyamide semicristallin est choisi parmi le 1010/B10, 11/B10, 12/B10, 1012/B12, 11/B12, 12/B12, 1210/B10, 1212/B12, 1014/B14, 11/B14, 12/B14, 1016/B16, 11/B16, 12/B16, 1010/P10, 11/P10, 12/P10, 1012/P12, 11/P12, 12/P12, 1210/P10, 1212/P12, 1014/P14, 11/P14, 12/P14, 1016/P16, 11/P16 et 12/P16.

**12.** Composition selon la revendication 10 ou 11, comprenant à titre de renforts des fibres de verre ou des fibres de carbone.

**13.** Procédé de fabrication de la composition telle que définie aux revendications 10 à 12, dans lequel l'on mélange les constituants de ladite composition par compoundage, notamment dans une extrudeuse bi-vis, un comalaxeur, ou un mélangeur interne.

**14.** Article moulé susceptible d'être obtenu à partir de la composition selon l'une des revendications 10 à 12, par moulage par injection.

**15.** Article moulé selon la revendication 14, choisi dans le groupe consistant en les pièces pour dispositifs portables, notamment des téléphones portables, montres connectées, ordinateurs, ou tablettes.

Europäisches
Patentamt

European
Patent Office

Office européen
des brevets

# RAPPORT DE RECHERCHE EUROPEENNE

Numéro de la demande

EP 19 30 5353

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 2011/105697 A1 (BUHLER FRIEDRICH SEVERIN [CH] ET AL) 5 mai 2011 (2011-05-05) * alinéa [0001] * * alinéa [0099] - alinéa [0101] * * tableau 1 * * alinéa [0115] * * exemples 1-8 * * revendication 17 * ----- | 1-15 | INV. C08G69/26 C08G69/36 C08K7/20 C08L77/02 C08L77/06 ADD. B29C45/00 |
| E,D | WO 2019/058077 A1 (ARKEMA FRANCE [FR]) 28 mars 2019 (2019-03-28) * revendications 1-26 * * page 20, ligne 21 - page 22, ligne 11 * * tableau 1 * * exemple I4 * ----- | 1-6,9, 10,12-15 | |

| DOMAINES TECHNIQUES RECHERCHES (IPC) |
|---|
| C08G C08K B29C C08L |

Le présent rapport a été établi pour toutes les revendications

| Lieu de la recherche | Date d'achèvement de la recherche | Examinateur |
|---|---|---|
| Munich | 16 septembre 2019 | Laudi, Ines |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
  .......................................................................
& : membre de la même famille, document correspondant

EPO FORM 1503 03.82 (P04C02)

**EP 3 712 197 A1**

## ANNEXE AU RAPPORT DE RECHERCHE EUROPEENNE
## RELATIF A LA DEMANDE DE BREVET EUROPEEN NO.

EP 19 30 5353

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-2019

| Document brevet cité au rapport de recherche | Date de publication | Membre(s) de la famille de brevet(s) | Date de publication |
|---|---|---|---|
| US 2011105697 A1 | 05-05-2011 | CN 102076770 A | 25-05-2011 |
| | | EP 2291457 A2 | 09-03-2011 |
| | | JP 5769618 B2 | 26-08-2015 |
| | | JP 2011525558 A | 22-09-2011 |
| | | KR 20110020873 A | 03-03-2011 |
| | | US 2011105697 A1 | 05-05-2011 |
| | | WO 2009156323 A2 | 30-12-2009 |
| WO 2019058077 A1 | 28-03-2019 | FR 3071503 A1 | 29-03-2019 |
| | | WO 2019058077 A1 | 28-03-2019 |

EPO FORM P0460

Pour tout renseignement concernant cette annexe : voir Journal Officiel de l'Office européen des brevets, No.12/82

**EP 3 712 197 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2113535 A1
- US 8586664 B2
- FR 1758829

**Littérature non-brevet citée dans la description**

- Nylon Plastics Handbook. Hanser Publishers, 1995
- ASM International. **FREDERICK T. WALLENBERGER ; JAMES C. WATSON ; HONG LI.** ASM Handbook. PPG industries Inc, 2001, vol. 21